# FASCICULE DE BREVET EUROPEEN

(11) **EP 2 250 069 B1**
(45) Date de publication et mention de la délivrance du brevet: **17.07.2013**
(21) Numéro de dépôt: 09723365.4
(22) Date de dépôt: 05.03.2009
(51) Int. Cl.: B62D 25/20, B62D 33/027

(54) **AGENCEMENT DE STRUCTURE D'UN VEHICULE AUTOMOBILE**
STRUKTURANORDNUNG FÜR EIN MOTORFAHRZEUG
STRUCTURAL ARRANGEMENT OF A MOTOR VEHICLE

(30) Priorité: 05.03.2008 FR 0851441
(43) Date de publication de la demande: 17.11.2010
(73) Titulaire: Renault s.a.s., 92100 Boulogne-Billancourt (FR)
(72) Inventeur: PARFUT, Sylvain, F-92500 Rueil Malmaison (FR); CAILLEAUX, Pierre, F-91410 Corbreuse (FR)
(86) Numéro de dépôt international: PCT/FR2009/050362
(87) Numéro de publication internationale: WO 2009/115739

(56) Documents cités:
- WO-A2-01/72569
- DE-A1- 3 813 455
- DE-A1- 10 345 318
- JP-A- 6 270 847
- JP-A- 2006 076 467
- JP-U- 58 126 582
- US-B1- 6 478 355

## Description

La présente invention concerne un agencement de structure d'un véhicule automobile, et notamment un agencement du type comportant un habitacle et une benne de chargement, entre lesquels s'étend une cloison sensiblement verticale, du type comportant un plancher de l'habitacle qui s'étend à une première hauteur, et un plancher de chargement de la benne qui s'étend à une deuxième hauteur distincte de la première hauteur du plancher de l'habitacle, et du type comportant un corps creux rigidifiant la structure et s'étendant sensiblement verticalement entre la première hauteur du plancher de l'habitacle et la deuxième hauteur du plancher de chargement.

Des véhicules à bennes de chargement, couramment appelés « pick-up », comportent principalement une caisse formant un poste de pilotage, et une benne solidarisée à cette caisse et formant un espace de chargement. Ils font l'objet d'étude de développement spécifique, du fait des efforts particuliers subis par ce type de véhicule, différents des efforts subis par un véhicule de type berline. Toutefois, dans certains cas, des « pick-up » sont développés sur la base de véhicule berline, et résulte d'aménagements apportés à une étude initiale propre à une berline. Il s'agit alors de récupérer un maximum de pièces de la berline existante, et d'apporter des solutions techniques quand aux éléments rapportés sur cette base, pour répondre à ces contraintes spécifiques.

Le document JP 2006 076467 propose un agencement de structure d'un véhicule automobile du type décrit ci-dessus, et dans lesquels est proposé un corps creux rigidifiant la structure s'étendant sensiblement verticalement entre la première hauteur du plancher de l'habitacle et la deuxième hauteur du plancher de chargement. Le corps creux comprend deux éléments de structure sensiblement verticaux.

Le document JP 6 270 847 décrit un agencement de structure d'un véhicule automobile du type décrit ci-dessus; comportant une cloison séparant l'habitacle de la benne du véhicule et un corps creux rigidifiant la structure et s'étendant entre le plancher de l'habitacle et le plancher de la benne, dans lequel la partie avant du corps creux est formé par la partie inférieure de la cloison.

La présente invention propose un agencement de structure d'un véhicule automobile conforme à la revendication 1.

Un tel agencement vise à apporter un surplus de raideur en torsion du véhicule, pour rigidifier l'ensemble formé par la benne et par la caisse.

Selon différentes caractéristiques de l'invention :
- le deuxième élément de structure est formé par une pièce de renfort, située en regard de la partie inférieure de la cloison, vers l'arrière du véhicule.
- le corps creux présente la forme d'un quadrilatère, composé dans sa partie supérieure de l'extrémité avant du plancher de chargement, et dans sa partie inférieure de l'extrémité arrière du plancher de l'habitacle, ce corps creux étant composé également d'une part d'un premier élément de structure formé par la partie inférieure de la cloison, cette partie inférieure de la cloison étant au contact du plancher de chargement et du plancher de l'habitacle, et d'autre part d'un deuxième élément de structure s'étendant sur la hauteur entre le plancher de chargement et le plancher de l'habitacle.
- la partie inférieure de la cloison est solidarisée à la face supérieure du plancher de l'habitacle, et en ce que l'extrémité avant du plancher de chargement est fixée sur la cloison.

L'invention concerne également un véhicule automobile, du type comportant un habitacle et une benne de chargement, caractérisé en ce qu'il comporte un agencement de structure tel qu'évoqué plus haut, et concerne également une série de véhicules automobiles, comprenant au moins un premier véhicule de type pick up, et un second véhicule de type berline, caractérisé en ce que l'habitacle et le plancher de l'habitacle associé est commun au premier et au second véhicule.

D'autres avantages et caractéristiques de l'invention apparaîtront à la lecture de la description qui va suivre, pour la compréhension de laquelle on se reportera aux figures annexées, parmi lesquelles :
- les figures 1 et 2 sont des vues d'un véhicule à benne de chargement, aptes à recevoir un agencement de structure selon l'invention,
- la figure 3 est une représentation schématique d'éléments constitutifs de l'agencement de structure selon l'invention, à savoir une cloison, un renfort de pareclose, un plancher de chargement, et un soubassement d'habitacle ;
- la figure 4 est une représentation schématique des éléments de la figure 1, et d'un tunnel solidaire du soubassement d'habitacle ;
- la figure 5 est une vue en section de la figure 2.

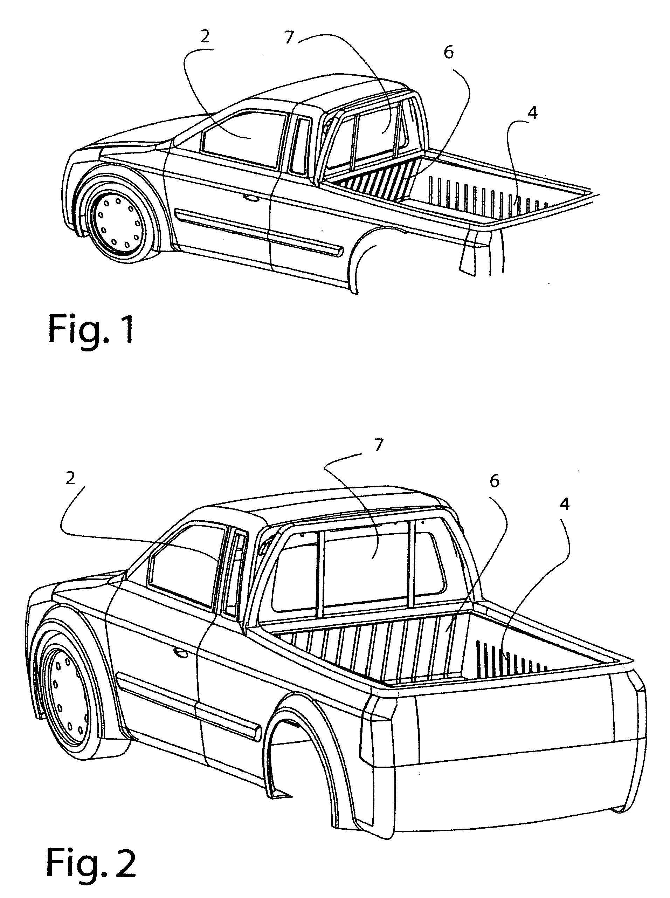

Tel que représenté sur les figures 1 et 2, un véhicule à benne de chargement comporte principalement un habitacle 2, et une benne de chargement 4, une cloison 6 étant disposée sensiblement verticalement à l'arrière de l'habitacle 2 pour réaliser d'une part la fermeture de l'habitacle, et d'autre part l'extrémité avant de la benne de chargement 4. Une vitre 7 est montée sur cette cloison 6 pour la visibilité arrière du conducteur, et des aménagements intérieurs peuvent être fixés sur la face de la cloison orientée à l'intérieur de l'habitacle.

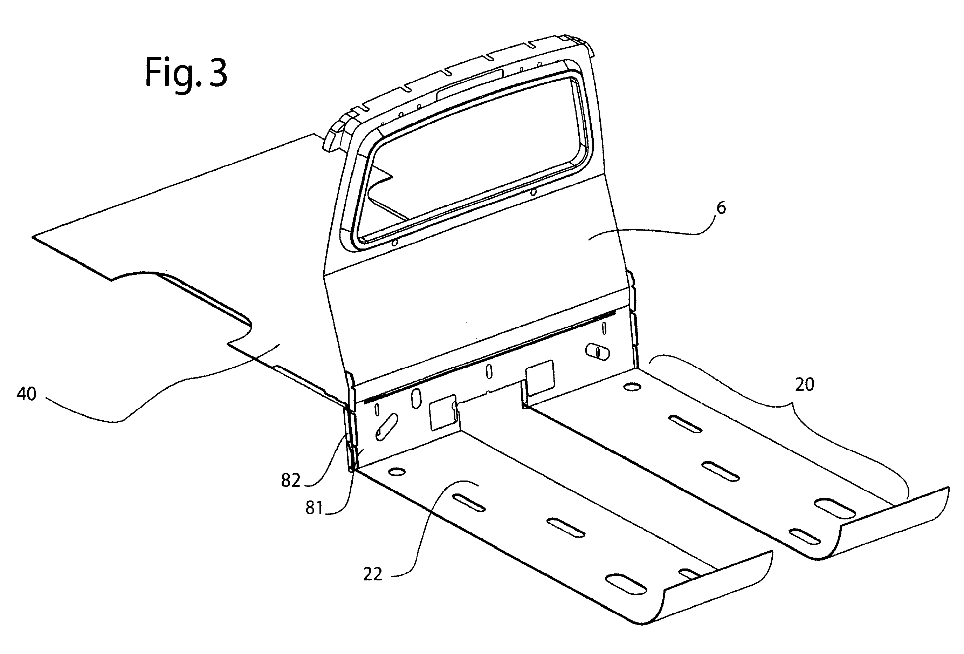

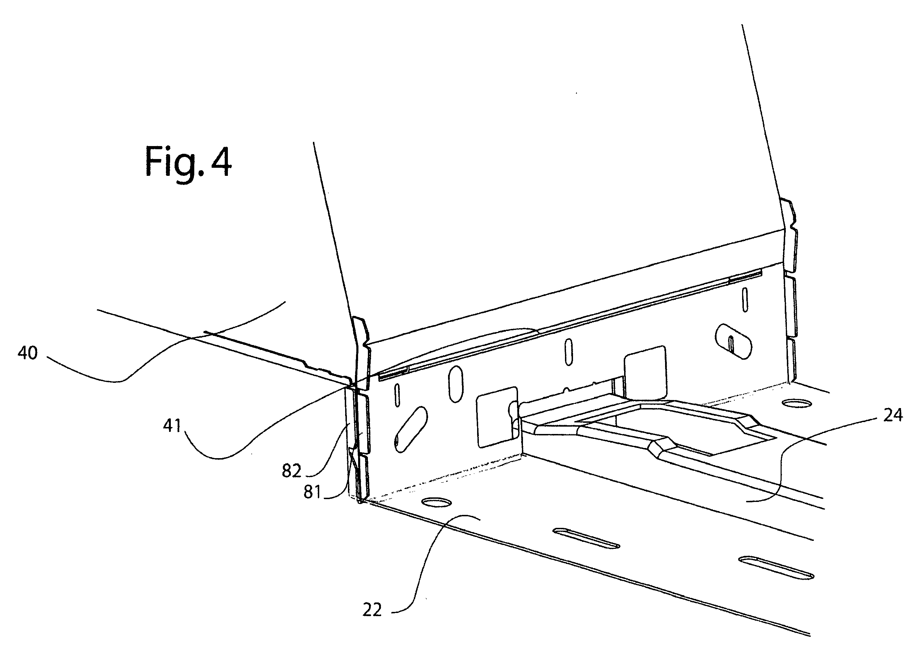

Tel que représenté sur les figures 3 à 5, un soubassement 20 s'étend sous l'habitacle 2, formé principalement d'un plancher central 22 sur lequel repose un tunnel 24, et d'autre part un plancher de chargement 40 s'étend à l'arrière du véhicule, formant la partie de support de la benne. Le soubassement 20 et le plancher de chargement 40 s'étendent à des hauteurs différentes, le plancher de chargement 40 étant disposé classiquement plus haut que le soubassement 20 de l'habitacle. Afin de rigidifier cet ensemble, des moyens structurels sensiblement verticaux sont disposés entre l'extrémité avant 41 du plancher de chargement 40 et le soubassement 20 de l'habitacle.

Selon l'invention, un corps creux 8 vertical est ainsi disposé transversalement au véhicule, entre le plancher de chargement 40 et le soubassement 20 de l'habitacle, sur toute la hauteur séparant les plans dans lesquels s'étendent respectivement ce plancher de chargement 40 et ce soubassement 20 d'habitacle. Ce corps creux 8 est formé de deux éléments de structure en regard l'un de l'autre. Le premier élément de structure 81 est formé par la partie inférieure de la cloison 6, dont l'extrémité inférieure est prolongée selon l'invention jusqu'à la face supérieure du plancher central 22 formant le soubassement de l'habitacle, cette cloison 6 prenant en outre appui contre l'extrémité avant 41 du plancher de chargement 40. Le deuxième élément de structure 82 est disposé entre la face inférieure du plancher de chargement 40, et l'extrémité arrière du plancher 22 du soubassement 20 de l'habitacle, ce deuxième élément de structure 82 étant disposé, vers l'arrière du véhicule, en regard du premier élément de structure 81 formé par l'extrémité inférieure de la cloison 6. Classiquement, les liaisons entre les éléments constitutifs du corps creux 8 et les différents planchers sont réalisées par soudage, par cordons ou par points.

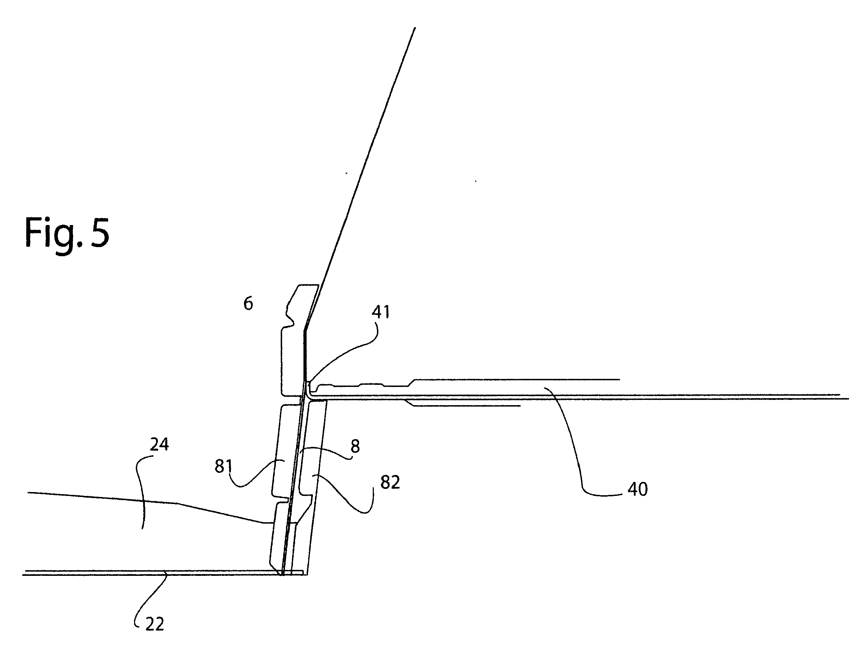

Dans le cas d'un soubassement 20 de véhicule comportant un tunnel central 24, tel que représenté à la figure 5 et 6, l'extrémité inférieure de la cloison 6 et le renfort de pareclose formé par le deuxième élément de structure 82 présente un évidemment central de forme complémentaire au tunnel 24, afin de venir se reprendre sur ce tunnel, et rigidifier ainsi encore la zone.

Le corps creux 8 ainsi formé permet d'obtenir un caisson de torsion disposé transversalement au véhicule, à l'endroit même ou la benne 4 est sollicitée principalement en torsion. Cet agencement permet d'apporter beaucoup de raideur en torsion sur l'ensemble du véhicule, la cloison 6 formant la partie avant de la pareclose faisant participer principalement le soubassement de l'habitacle et toute la caisse formant cette habitacle, tandis que le renfort de pareclose fait participer principalement le plancher de chargement. De plus la cloison 6 intégrant la pareclose permet d'avoir une continuité d'inertie, du fait d'une réalisation à un seul élément. Et c'est un avantage selon l'invention, dans la mesure ou c'est par la cloison que passe le plan de torsion de la caisse sur les véhicules de type pick-up.

Un tel agencement permet de réaliser des séries de véhicules automobiles, comprenant au moins un premier véhicule de type pick up, c'est-à-dire tel qu'évoqué ci-dessus, et un second véhicule de type berline, comprenant un habitacle et une structure fermée à l'arrière du véhicule, de coffre ou de hayon, et de réaliser ces séries sur la base d'un habitacle commun. Une partie des études n'est plus alors spécifique pour tel ou tel type de véhicule, ce qui représente un gain important pour la conception de l'ensemble de la gamme d'un constructeur.

## Revendications

1. Agencement de structure d'un véhicule automobile, du type comportant un habitacle (2) et une benne de chargement (4), entre lesquels s'étend une cloison (6) sensiblement verticale, du type comportant un plancher de l'habitacle (22) qui s'étend à une première hauteur, et un plancher de chargement (40) de la benne (4) qui s'étend à une deuxième hauteur distincte de la première hauteur du plancher de l'habitacle (22), et du type comportant un corps creux (8) rigidifiant la structure et s'étendant sensiblement verticalement entre la première hauteur du plancher de l'habitacle (22) et la deuxième hauteur du plancher de chargement (40),
**caractérisé en ce que** le corps creux (8) comprend deux éléments de structure (81, 82) sensiblement verticaux, en regard l'un de l'autre s'étendant sur toute la hauteur séparant les planchers (22, 40), et **en ce que** le premier élément de structure (81) est formé par la partie inférieure de la cloison (6).

2. Agencement de structure selon la revendication 1, **caractérisé en ce que** le deuxième élément de structure (82) est formé par une pièce de renfort, située en regard de la partie inférieure de la cloison (6), vers l'arrière du véhicule.

3. Agencement de structure selon la revendication 1, **caractérisé en ce que** le corps creux (8) présente la forme d'un quadrilatère, composé dans sa partie supérieure de l'extrémité avant (41) du plancher de chargement (40), et dans sa partie inférieure de l'extrémité arrière du plancher de l'habitacle (22), ce corps creux (8) étant composé également d'une part d'un premier élément de structure (81) formé par la partie inférieure de la cloison (6), cette partie inférieure de la cloison (6) étant au contact du plancher de chargement (40) et du plancher de l'habitacle (22), et d'autre part d'un deuxième élément de structure (82) s'étendant sur la hauteur entre le plancher de chargement (40) et le plancher de l'habitacle (22).

4. Agencement de structure selon la revendication précédente, **caractérisé en ce que** la partie inférieure de la cloison (6) est solidarisée à la face supérieure du plancher de l'habitacle (22), et **en ce que** l'extrémité avant (41) du plancher de chargement (40)est fixée sur la cloison (6).
4./ Véhicule automobile, du type comportant un habitacle (2) et une benne de chargement (4), **caractérisé en ce qu'**il comporte un agencement de structure selon l'une des revendications précédentes.

5. Série de véhicules automobiles, comprenant au moins un premier véhicule selon la revendication précédente, et un second véhicule de type berline, comprenant un habitacle et une structure fermée à l'arrière du véhicule, de coffre ou de hayon, **caractérisé en ce que** l'habitacle et le plancher de l'habitacle associé est commun au premier et au second véhicule.

## Patentansprüche

1. Strukturanordnung eines Kraftfahrzeugs von der Art, die einen Innenraum (2) und eine Ladepritsche (4) aufweist, zwischen denen sich eine im Wesentlichen senkrechte Trennwand (6) erstreckt, von der Art, die einen Boden (22) des Innenraums, der sich auf einer ersten Höhe erstreckt, und einen Ladeboden (40) der Pritsche (4) aufweist, der sich auf einer zweiten, anderen Höhe als der ersten Höhe des Bodens (22) des Innenraums erstreckt, und von der Art, die einen Hohlkörper (8) aufweist, der die Struktur versteift und sich zwischen der ersten Höhe des Bodens (22) des Innenraums und der zweiten Höhe des Ladebodens (40) im Wesentlichen senkrecht erstreckt, wobei der Hohlkörper (8) zwei im Wesentlichen senkrechte Strukturelemente (81, 82) enthält, und das erste Strukturelement (81) vom unteren Bereich der Trennwand (6) geformt wird, **dadurch gekennzeichnet, dass** der Hohlkörper (8) die Form eines Vierecks hat, das in seinem oberen Bereich aus dem vorderen Ende (41) des Ladebodens (40) und in seinem unteren Bereich aus dem hinteren Ende des Bodens (22) des Innenraums besteht, wobei dieser Hohlkörper (8) ebenfalls einerseits aus einem ersten Strukturelement (81), das vom unteren Bereich der Trennwand (6) geformt wird, wobei dieser untere Bereich der Trennwand (6) mit dem Ladeboden (40) und dem Boden (22) des Innenraums in Kontakt ist, und andererseits aus einem zweiten Strukturelement (82) besteht, das sich über die Höhe zwischen dem Ladeboden (40) und dem Boden (22) des Innenraums erstreckt.

2. Strukturanordnung nach Anspruch 1, **dadurch gekennzeichnet, dass** das zweite Strukturelement (82) von einem Verstärkungsbauteil geformt wird, das sich gegenüber dem unteren Bereich der Trennwand (6) zur Rückseite des Fahrzeugs hin befindet.

3. Strukturanordnung nach Anspruch 1, **dadurch gekennzeichnet, dass** der untere Bereich der Trennwand (6) fest mit der Oberseite des Bodens (22) des Innenraums verbunden ist, und dass das vordere Ende (41) des Ladebodens (40) an der Trennwand (6) befestigt ist.

4. Kraftfahrzeug von der Art, die einen Innenraum (2) und eine Ladepritsche (4) aufweist, **dadurch gekennzeichnet, dass** es eine Strukturanordnung nach einem der vorhergehenden Ansprüche aufweist.

5. Serie von Kraftfahrzeugen, die mindestens ein erstes Fahrzeug nach dem vorhergehenden Anspruch und ein zweites Fahrzeug von der Art Limousine aufweist, das einen Innenraum und an der Rückseite des Fahrzeugs eine geschlossene Struktur eines Kofferraums oder einer Heckklappe aufweist, **dadurch gekennzeichnet, dass** der Innenraum und der zugeordnete Boden des Innenraums dem ersten und dem zweiten Fahrzeug gemeinsam sind.

## Claims

1. Structural arrangement of a motor vehicle of the type including a cabin (2) and a loading bed (4) between which lies a substantially vertical partition (6), of the type including a cabin floor (22) that extends at a first height and a loading floor (40) of the bed (4) that extends at a second height which differs from the first height of the cabin floor (22) and of the type including a hollow body (8) that stiffens the structure and extends substantially vertically between the first height of the cabin floor (22) and the second height of the loading floor (40), the hollow body (8) including two substantially vertical structural elements (81, 82) and the first structural element (81) being formed by a lower portion of the partition (6), **characterized in that** the hollow body (8) has the shape of a quadrilateral composed in its upper portion of the front end (41) of the loading floor (40) and in its lower portion of the rear end of the cabin floor (22), this hollow body (8) also including on the one hand a first structural element (81) formed by the lower portion of the partition (6), this lower portion of the partition (6) being in contact with the loading floor (40) and the cabin floor (22), and on the other hand a second structural element (82) that extends in the heightwise direction between the loading floor (40) and the cabin floor (22).

2. Structural arrangement according to Claim 1, **characterized in that** the second structural element (82) is formed by a reinforcing part facing the lower portion of the partition (6) towards the rear of the vehicle.

3. Structural arrangement according to Claim 1, **characterized in that** the lower portion of the partition (6) is fastened to the upper face of the cabin floor (22) and **in that** the front end (41) of the loading floor (40) is fixed to the partition (6).

4. Motor vehicle, of the type including a cabin (2) and a loading bed (4), **characterized in that** it includes a structural arrangement according to any one of the previous claims.

5. Series of motor vehicles, including at least a first vehicle according to the preceding claim and a saloon type second vehicle including a cabin and a closed structure at the rear of the vehicle, boot or tailgate, **characterized in that** the cabin and the associated cabin floor are common to the first and second vehicles.
